# FASCICULE DE BREVET EUROPEEN

(11) **EP 2 807 025 B1**
(45) Date de publication et mention de la délivrance du brevet: **09.12.2020**
(21) Numéro de dépôt: 13701746.3
(22) Date de dépôt: 21.01.2013
(51) Int. Cl.: B32B 3/26, B32B 3/28, B32B 5/14, B60R 13/08

(54) **PIECE D'EQUIPEMENT DE VEHICULE AUTOMOBILE ET VEHICULE AUTOMOBILE ASSOCIE**
KOMPONENTE FÜR EIN KRAFTFAHRZEUG UND ENTSPRECHENDES KRAFTFAHRZEUG
COMPONENT FOR A MOTOR VEHICLE AND ASSOCIATED MOTOR VEHICLE

(30) Priorité: 26.01.2012 FR 1250748
(43) Date de publication de la demande: 03.12.2014
(73) Titulaire: Faurecia Automotive Industrie, 92000 Nanterre (FR)
(72) Inventeur: RONDEAU, Jean-François, 08110 Carignan (FR); MARCQ, Philippe-Jean, 08210 Mouzon (FR)
(74) Mandataire: Lavoix
(86) Numéro de dépôt international: PCT/EP2013/051055
(87) Numéro de publication internationale: WO 2013/110573

(56) Documents cités:
- EP-A1- 0 511 157
- EP-A1- 1 251 001
- WO-A1-97/48576
- DE-A1- 3 301 682
- DE-A1-102004 053 751
- US-A1- 2004 231 915

## Description

La présente invention concerne une pièce d'équipement de véhicule automobile, comprenant :
- une première couche de support réalisée en un matériau composite ;
- une deuxième couche réalisée en un matériau poreux ouvert, la deuxième couche étant appliquée partiellement sur la première couche, la deuxième couche comportant au moins une première région appliquée sur la première couche et au moins une deuxième région disposée en regard et à l'écart de la première couche, la deuxième région délimitant avec la première couche un espace intermédiaire au moins partiellement rempli de gaz.

Cette pièce est destinée par exemple à former un capot de protection, une tablette ou un faux plancher présentant des propriétés d'insonorisation acoustique.

Avantageusement, la pièce du type précité est destinée à être utilisée comme un capot inférieur de moteur de véhicule automobile, appelé communément « carénage sous moteur ».

Une telle pièce de fermeture a pour fonction d'obturer vers le bas la partie inférieure du berceau moteur pour isoler le moteur de l'extérieur. Elle a également pour fonction de protéger le moteur des chocs éventuels, et d'éviter les projections de gravier, d'eau et de boue vers le moteur, lors de la marche du véhicule. Cette pièce évite également que des écoulements d'huile ou d'eau provenant du moteur tombent sur le sol. Cette pièce a des fonctions d'amélioration de l'aérodynamisme du véhicule (fond plat), et d'optimisation des différentes entrées d'air (écopes).

D'une manière connue, ces pièces structurelles sont fabriquées généralement d'un seul tenant par injection, par exemple en polypropylène. Les pièces du type précité sont par exemple décrites dans FR 2 853 297 ou EP 0 511 157.

Un tel ensemble est robuste mais peut encore être amélioré acoustiquement. En effet, compte tenu des contraintes de réduction des gaz à effet de serre sur les véhicules, les ensembles de motorisation actuels sont généralement plus bruyants que par le passé, et doivent être mieux insonorisés par des techniques d'encapsulage par exemple.

Pour palier ce problème, il est connu de disposer sur le carénage sous moteur une couche d'absorption acoustique, qui a cependant pour désavantage d'augmenter le poids de la structure, et donc la consommation du véhicule.

Au sens de la présente invention, un ensemble d'insonorisation assure une « isolation » acoustique lorsqu'il empêche l'entrée d'ondes acoustiques à moyennes et hautes fréquences dans l'espace insonorisé, essentiellement par réflexion des ondes vers les sources de bruit ou l'extérieur de l'espace insonorisé.

Un ensemble d'insonorisation fonctionne par « absorption acoustique » (dans le domaine des moyennes et hautes fréquences) lorsque l'énergie des ondes acoustiques se dissipe dans un matériau absorbant.

Un ensemble d'insonorisation performant doit fonctionner à la fois en assurant une bonne isolation et par absorption.

Un but de l'invention est d'obtenir une pièce d'équipement de véhicule automobile, notamment un carénage sous moteur, qui présente des propriétés structurelles adéquates, un poids réduit, et une insonorisation efficace.

A cet effet, l'invention a pour objet une pièce du type précité, caractérisé en ce que la deuxième région présente une densité inférieure à la densité de la première région, la deuxième couche comprenant au moins une troisième région appliquée sur la première couche, la troisième région présentant une densité inférieure à la densité de la première région.

La pièce selon l'invention peut comprendre l'une ou plusieurs des caractéristiques suivantes, prise(s) isolément ou suivant toute combinaison techniquement possible :
- la densité de la troisième région est inférieure à la densité de la deuxième région ;
- la densité de la deuxième région est comprise entre 250 kg/m³ et 300 kg/m³, la densité de la troisième région étant comprise entre 200 kg/m³ et 250 kg/m³ ;
- elle comporte au moins une couche poreuse résistive disposée sur l'une de la première couche et de la deuxième couche, la résistance au passage de l'air de la couche poreuse résistive étant comprise entre 200 N.m⁻³.s et 2000 N.m⁻³.s ;
- la résistance au passage de l'air de la couche poreuse résistive en regard de la troisième région est supérieure à la résistance au passage de l'air de la troisième région ;
- la différence entre la résistance au passage de l'air de la couche poreuse résistive et la résistance au passage de l'air de la troisième région est supérieure à 250 N.m⁻³.s ;
- la deuxième région s'étend sensiblement parallèlement à une zone de la première couche, la deuxième région étant raccordée à la première région par une région intermédiaire faisant saillie entre la première région et la deuxième région ;
- la première couche est formée d'un seul tenant à partir d'un matériau composite comportant des fibres de polymère et des fibres céramiques, en particulier des fibres de silice ;
- la deuxième couche est formée d'un seul tenant à partir d'un matériau composite comprimé localement, le matériau composite contenant avantageusement des fibres de polymère et des fibres de céramique, notamment des fibres de silice ;
- la masse surfacique de la première couche est comprise entre 500 g/m² et 1500 g/m² ;
- la masse surfacique de la deuxième couche est comprise entre 500 g/m² et 1500 g/m² ;
- l'épaisseur maximale de l'espace intermédiaire, prise entre la deuxième région et la première couche est supérieure à l'épaisseur de la troisième région ;
- elle comporte une couche étanche de protection disposée en regard de la première couche à l'opposé de la deuxième couche.

L'invention a également pour objet un véhicule automobile caractérisé en ce qu'il comporte une pièce telle que décrite plus haut, la pièce étant avantageusement disposée sous le moteur du véhicule pour former un carénage de protection.

L'invention a également pour objet un procédé de fabrication préférentiel d'une pièce telle que définie plus haut, caractérisée en ce qu'il comporte les étapes suivantes :
- fourniture d'un matériau composite destiné à former la première couche de support ;
- fourniture d'un matériau poreux ouvert composite destiné à former la deuxième couche ;
- formation, sur la deuxième couche d'au moins une première région, d'au moins une deuxième région de densité inférieure à la densité de la première région et d'au moins une troisième région de densité inférieure à la densité de la première région ;
- application de la première région sur la première couche ;
- disposition de la deuxième région en regard et à l'écart de la première couche pour délimiter avec la première couche un espace intermédiaire au moins partiellement rempli de gaz ou de matériau poreux ;
- application de la troisième région sur la première couche.

Le procédé selon l'invention peut comprendre la caractéristique suivante :
- disposition du matériau poreux ouvert, et du matériau composite entre deux parties d'un moule ;
- insertion d'un noyau entre le matériau poreux ouvert et le matériau composite ;
- fermeture partielle du moule, le noyau s'insérant entre le matériau composite et le matériau poreux ouvert pour former la deuxième région destinée à être disposée à l'écart de la première couche ;
- ouverture du moule et retrait du noyau ;
- fermeture totale du moule pour appliquer la première région et la troisième région contre la première couche, la deuxième région étant disposée en regard et à l'écart de la première couche.

L'invention sera mieux comprise à la lecture de la description qui va suivre, donnée uniquement à titre d'exemple et faite en se référant aux dessins annexés, sur lesquels :
- la Figure 1 est une vue de dessous d'une première pièce d'équipement de véhicule automobile selon l'invention ;
- la Figure 2 est une vue en coupe partielle suivant un plan transversal de la pièce de la Figure 1 ;
- la Figure 3 est une vue du coefficient d'absorption en fonction de la fréquence pour la pièce selon l'invention, en comparaison avec une pièce de l'état de la technique ;
- la Figure 4 est une vue analogue à la Figure 2 d'une deuxième pièce selon l'invention ;
- la Figure 5 est une vue analogue à la Figure 3 du coefficient d'absorption en fonction de la fréquence pour la deuxième pièce ;
- la Figure 6 est une vue analogue à la Figure 2 d'une troisième pièce selon l'invention.
- la Figure 7 est une vue de dessus de la première pièce représentée sur la Figure 1 ;
- les Figures 8 à 10 illustrent des étapes du procédé de fabrication d'une pièce selon l'invention.

Dans tout ce qui suit, les orientations sont les orientations habituelles d'un véhicule automobile. Ainsi, les termes « avant », « arrière », « gauche », « droite », « supérieur », « inférieur », « extérieur », « intérieur » s'entendent généralement par rapport au sens normal de circulation du véhicule et par rapport à un occupant du véhicule automobile.

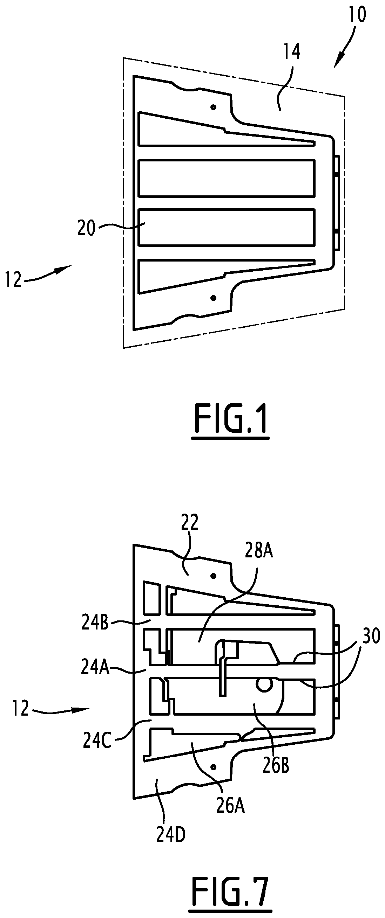

Les Figures 1, 2 et 7 illustrent partiellement un premier véhicule automobile 10 muni d'une pièce d'équipement 12 selon l'invention.

Dans l'exemple particulier représenté sur la Figure 1, la pièce 12 forme un carénage inférieur de moteur de véhicule automobile ou « carénage sous moteur ». Elle est disposée sous le compartiment moteur 14 du véhicule 10 représenté schématiquement sur la Figure 1.

Plus généralement, la pièce 12 forme une paroi structurante et insonorisante du véhicule, tel qu'un faux plancher, ou un autre sous capot. En variante, la pièce 12 forme une pièce intérieure du véhicule telle qu'une tablette formant un dispositif de masquage arrière du coffre du véhicule.

Dans l'exemple particulier représenté sur la Figure 1, la pièce 12 présente sensiblement une forme de trapèze ou de triangle convergeant vers l'avant du véhicule automobile.

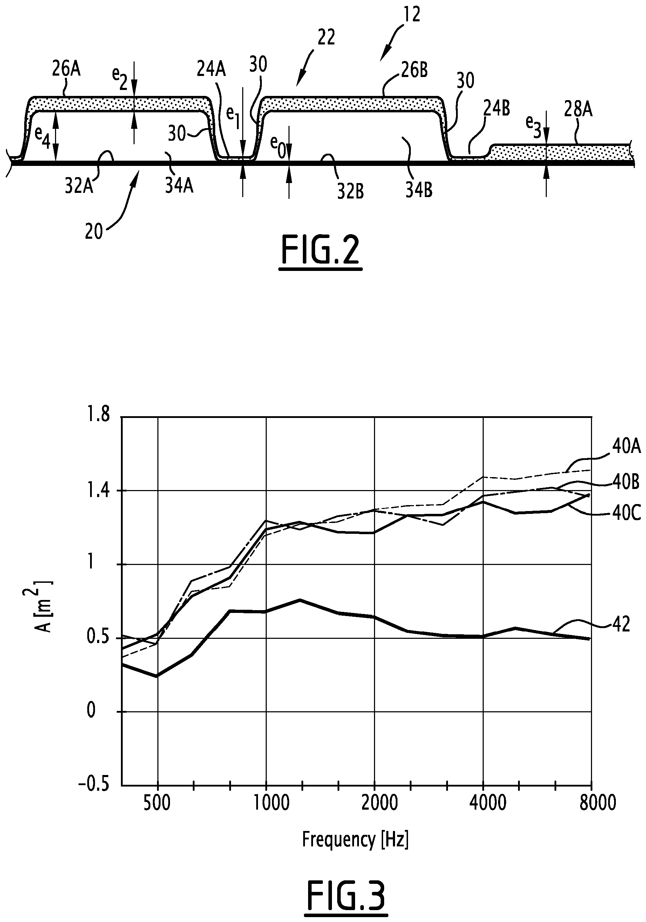

Comme illustré par la Figure 2, la pièce 12 comporte une première couche 20 de support et une deuxième couche 22, appliquée partiellement sur la première couche 20.

La deuxième couche 22 délimite ainsi au moins une première région comprimée 24A à 24D, appliquée sur la première couche 20 pour former une zone structurante, au moins une deuxième région 26A, 26B faiblement comprimée ou non comprimée, formant membrane acoustique, et au moins une troisième région 28A faiblement comprimée ou non comprimée appliquée sur la première couche 20.

Elle définit en outre au moins une région intermédiaire 30 raccordant chaque première région 24A à 24D à une deuxième région 26A, 26B.

La première couche 20 est formée avantageusement d'un seul tenant. Elle est en particulier formée à base d'un matériau composite obtenu à partir d'un feutre comprimé et chauffé. Le feutre comporte par exemple des fibres en polymère, notamment en polymère thermofusible, qui peuvent être des fibres de polyoléfine, tels que des fibres de polypropylène.

Les fibres de polymère sont fondues au moins en partie lors du chauffage pour former une matrice dans laquelle sont dispersées les fibres de céramique.

En particulier, le feutre comporte un mélange de fibres de polymère telles que définies plus haut, et de fibres céramiques, notamment de fibres de verre.

Le pourcentage massique de fibres de polymère est par exemple compris entre 40% et 70%, et le pourcentage massique de fibres de céramique est par exemple compris entre 40% et 70%. Un tel matériau est désigné couramment par l'appellation « Sommold ».

Avantageusement, le matériau composite comporte, outre la matrice formée à partir des fibres de polymère et les fibres de céramique, d'autres fibres, telles que des fibres naturelles, ou des fibres naturelles régénérées.

Dans cet exemple, l'épaisseur moyenne e0 de la première couche 20 est inférieure à l'épaisseur moyenne de la deuxième couche 22. L'épaisseur moyenne e0 est en tout état de cause inférieure à l'épaisseur moyenne e2 de chaque deuxième région 26A, 26B et à l'épaisseur moyenne e3 de chaque troisième région 28A.

L'épaisseur moyenne e0 de la première couche 20 est notamment comprise entre 0.2 mm et 2 mm, avantageusement comprise entre 0.8mm et 1,4 mm. Elle est avantageusement constante.

La première couche 20 est comprimée. Ainsi, sa masse surfacique est comprise entre 500 g/m² et 1500 g/m² et est avantageusement comprise entre 700 g/m² et 800 g/m².

Dans cet exemple, la première couche 20 est étanche au passage de l'air. Elle présente une résistance au passage de l'air trop élevée pour être mesurée par la méthode décrite dans la Thèse « Mesure des paramètres caractérisant un milieu poreux. Etude expérimentale du comportement acoustique des mousses aux basses fréquences ». Michel HENRY, soutenue le 3 octobre 1997 à l'Université du Mans.

En variante, notamment pour des applications de tablette, la première couche 20 est poreuse. Elle présente alors un pourcentage massique de polymère compris entre 40% et 50%. La résistance au passage de l'air de la première couche et alors comprise entre 800 N. m⁻³ s et 2000 N m⁻³ s. Dans ce cas la structure est inversée, la première couche 20 se trouvera orientée vers le haut de l'habitacle

La première couche 20 ainsi que les régions 24A à 24D sont rigides pour présenter un caractère structurant. La pièce 12 présente ainsi une flèche résiduelle sous son propre poids inférieure à 4 mm mesurée par flexion trois points (les trois points sont constitués par les trois extrémités de la pièce formant approximativement un triangle).

La deuxième couche 22 est également formée d'un seul tenant. Elle est avantageusement formée à base du même matériau composite que celui formant la première couche 20 ou d'un matériau analogue, notamment obtenu à partir d'un feutre à base de fibres de polymère et de fibres de céramique, tel que du « Sommold ».

Le matériau formant la deuxième couche est poreux à pores ouverts.

La deuxième couche 22 présente une masse surfacique comprise entre 500 g/m² et 1500 g/m² et avantageusement comprise entre 700 g/m² et 800 g/m², ou entre 1000 g/m² et 1200 g/m².

Dans l'exemple représenté sur les Figures 2 et 7, au moins une première région comprimée 24A, 24B, 24C de la deuxième couche 22 s'étend à travers la pièce 12 et au moins une première région comprimée 24D de la deuxième couche 22 s'étend suivant la périphérie de la pièce 12.

Dans l'exemple représenté sur les Figures 2 et 7, la deuxième couche 22 comporte une pluralité de premières régions 24A, 24B, 24C s'étendant à travers la pièce 12.

Chaque première région 24A à 24D est appliquée sur la première couche 20. Chaque première région 24A à 24D est comprimée pour présenter une densité d1 supérieure à la densité d2 de chaque deuxième région 26A, 26B, et une densité d1 supérieure à la densité d3 de la troisième région 28.

L'épaisseur moyenne e1 de chaque première région 24A à 24D est inférieure à l'épaisseur moyenne e0 de chaque deuxième région 26A, 26B et à l'épaisseur moyenne e3 de chaque troisième région 28A. L'épaisseur moyenne e1 et est notamment comprise entre 0.2 mm et 2 mm. Elle est sensiblement constante.

Chaque première région 24A à 24D appliquée sur la première couche 20 présente une rigidité élevée, comme précisé plus haut.

Chaque deuxième région 26A, 26B s'étend avantageusement entre deux premières régions 24A, 24B. Chaque deuxième région 26A, 26B est située en regard et totalement à l'écart de la première couche support 20.

Dans l'exemple représenté sur la Figure 2, chaque deuxième région 26A, 26B, s'étend sensiblement parallèlement à une zone en regard 32A, 32B de la première couche 20.

En référence à la Figure 2, l'épaisseur moyenne e2 de chaque deuxième région 26A, 26B est supérieure à l'épaisseur moyenne e1 de chaque première région 24A, 24B et est avantageusement inférieure à l'épaisseur moyenne e3 de chaque troisième région 28A. L'épaisseur moyenne e2 est notamment est avantageusement comprise entre 2 mm et 6 mm.

La densité d2 de chaque deuxième région 26A, 26B est inférieure à la densité d1 de chaque première région 24A et est avantageusement supérieure à la densité d3 de chaque deuxième région 28A. La densité d2 est par exemple comprise entre 250 kg/m³ et 300 kg/m³.

La résistance au passage de l'air de chaque deuxième région 26A, 26B est inférieure à 2000 N.m⁻³.s.

Chaque deuxième région 26A, 26B et la première couche 20 en regard définissent un espace intermédiaire creux 34A, 34B formant avantageusement une lame d'air. Ainsi, l'ensemble formé par la zone 32A, 32B de la première couche 20, l'espace intermédiaire 34A et la deuxième région 26A forment une membrane acoustique ouverte poreuse présentant des propriétés absorbantes.

L'épaisseur maximale e4 de l'espace intermédiaire 34A, 34B, prise perpendiculairement à une surface directrice de chaque deuxième région 26A, 26B est supérieure à l'épaisseur moyenne e2 de la deuxième région 26A, 26B, avantageusement au moins deux fois supérieure à l'épaisseur e2.

Avantageusement, l'espace intermédiaire 34A, 34B est rempli d'air en étant dépourvu de solide.

Les régions intermédiaires 30 raccordent chaque première région 24A, 24B à une deuxième région 26A, 26B. Elles font saillie à l'écart de la première couche 20 à partir de chaque première région 24A, 24B vers la deuxième région 26A, 26B.

Chaque troisième région 28A est appliquée-contre la première couche 20.

Chaque troisième région 28A est faiblement comprimée ou non comprimée. Elle présente ainsi une densité moyenne d3 inférieure à la densité moyenne d1 de chaque première région 24A, 24B et inférieure à la densité moyenne d2 de chaque deuxième région 26A, 26B. La densité moyenne d3 de chaque troisième région 28A est par exemple comprise entre 200 kg/m³ et 250 kg/m³.

La résistance au passage de l'air de chaque troisième région 28A est faible. Elle est par exemple inférieure à la résistance du passage de l'air de chaque deuxième région 26A, 26B et est notamment inférieure à 1500 N.m⁻³.s.

L'épaisseur moyenne e3 de chaque troisième région 28A est supérieure à l'épaisseur moyenne e2 de chaque deuxième région 26A, 26B et est supérieure à l'épaisseur moyenne e1 de chaque première région 24A à 24D.

L'épaisseur moyenne e3 de chaque troisième région 28A est par exemple supérieure à 5 mm et est notamment comprise entre 6 mm et 10 mm .

Chaque troisième région 28A fait partiellement saillie à l'écart de la première couche 20, à partir d'une première région 24A, 24B. Elle présente une épaisseur e3 inférieure à l'épaisseur e4 de l'espace intermédiaire 34A, 34B.

Ainsi, dans le cas d'un carénage inférieur de moteur, chaque troisième région 28A est située en regard d'éléments du moteur pour lequel il n'est pas possible de prévoir un espace intermédiaire creux 34A, 34B comme en regard des deuxièmes régions 26A, 26B.

En fonctionnement, lorsque la pièce 12 est montée sur le véhicule automobile 10, les premières régions 24A à 24D, appliquées sur la première couche 20 assurent avec la première couche 20 une rigidité structurelle à la pièce 12.

Comme on l'a vu plus haut, les deuxièmes régions 26A, 26B de la deuxième couche 22 forment, avec les zones en regard 32A, 32B de la première couche 20 et avec les espaces intermédiaires 34A, 34B, des membranes d'absorption acoustique poreuses qui absorbent le bruit dans les fréquences basses et moyennes, par exemple dans une gamme de fréquences comprise entre 100Hz et 2000Hz.

Les troisièmes régions 28A sont également partiellement absorbantes. Elles coopèrent avec les zones de la première couche 20 sur lesquelles elles sont appliquées pour assurer une absorption acoustique notamment dans la gamme de fréquences basses et moyennes.

Le comportement en absorption de trois exemples de pièces 12 selon l'invention, représentées par les courbes respectives 40A, 40B, 40C est illustré par la Figure 3.

La pièce 12 correspondant à la courbe 40A présente une première couche 20 avec une masse surfacique de 750 g/m² et une couche supérieure 22 avec une masse surfacique de 750 g/m². La pièce 12 correspondant à la courbe 40B présente une couche supérieure 22 avec une masse surfacique de 1100 g/m² et une couche 20 avec une masse surfacique de 750 g/m². La pièce 12 illustrée par la courbe 40C présente une première couche 20 et une deuxième couche 22 ayant chacune une masse surfacique égale à 1100 g/m².

Le comportement d'une pièce analogue de l'état de la technique comprenant une couche rigide en polypropylène et une couche absorbante est illustré par la courbe 42. Comme on peut le voir, l'absorption de la pièce 12 selon l'invention est très supérieure à celle de l'état de la technique.

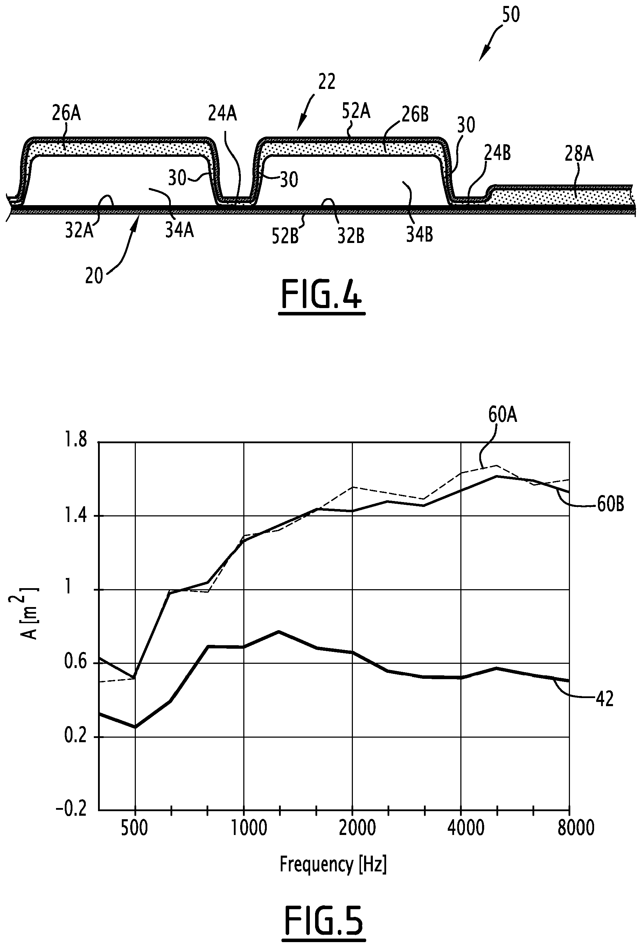

Une deuxième pièce 50 selon l'invention est illustrée par la Figure 4. A la différence de la première pièce 12, la deuxième pièce 50 comporte en outre au moins une couche poreuse résistive 52A, 52B disposée sur l'une ou/et l'autre de la première couche de support 20 et de la deuxième couche 22.

Dans l'exemple représenté sur la Figure 4, la deuxième pièce 50 comporte une première couche poreuse résistive 52A disposée sur la deuxième couche 22, à l'opposé de la première couche 20 et une deuxième couche poreuse résistive 52B disposée sous la première couche 20, à l'opposé de la deuxième couche 22.

Dans cet exemple, chaque couche poreuse résistive 52A, 52B couvre sensiblement la totalité de la couche 20, 22 sur laquelle elle est appliquée. La couche poreuse résistive 52A recouvre notamment les premières régions 24A, 24B, les deuxièmes régions 26A, 26B et la troisième région 28A, ainsi que les régions de support 30.

Chaque couche poreuse résistive 52A, 52B est par exemple formée à base d'un non tissé résistif ou d'un matériau ayant une résistance au passage de l'air contrôlée (par exemple un feutre de faible grammage, ou un textile, de préférence calandré).

Chaque couche poreuse résistive 52A, 52B présente avantageusement une masse surfacique comprise entre 20 g/m² et 200 g/m². Elle présente une résistance au passage de l'air comprise entre 200 N.m.⁻³s et 2000 N.m.⁻³s, avantageusement comprise entre 300 N.m⁻³.s et 1000 N.m⁻³.s.

L'ajout d'une première couche poreuse résistive 52A permet, dans les régions 26A et 26B de bénéficier d'un effet de membrane amélioré, en particulier dans les basses et moyennes fréquences, du fait d'une sommation en série des résistances au passage de l'air de la première couche 52A et des régions 26B et 52B. Ainsi les membranes formées sont très efficaces en absorption en basses et moyennes fréquences dans une gamme comprise notamment entre 100Hz et 2000Hz.

L'ajout de cette même couche 52A sur les régions 28A qui travaillent non par effet de membrane mais par absorption classique d'un matériau poreux ouvert permet par une différence de résistance au passage de l'air entre la couche 52A et la région 28A de bénéficier d'un gain en absorption en particulier en moyennes et hautes fréquences. Il s'agit là d'un fonctionnement en absorbeur bi-perméable réglable. Cette différence de résistance au passage de l'air est avantageusement supérieure ou égale à 250 N m⁻³.s, la résistance au passage de l'air de la couche 52A étant supérieure à celle de la région 28A..

De plus, compte tenu des faibles épaisseurs obtenues dans ces régions, notamment des épaisseurs inférieures à 7 mm, une telle disposition est particulièrement adaptée pour procurer une absorption dans une gamme de hautes fréquences, notamment supérieure à 1000 Hertz.

Ainsi les deuxièmes régions 26A, 26B formant membranes et les troisièmes régions faiblement comprimées coopèrent de manière synergique pour fournir une absorption large bande.

La couche résistive 52B appliquée sous la première couche 20 est par ailleurs très efficace pour résister aux chocs, notamment aux chocs engendrés par des particules ou des projections, comme des cailloux.

La Figure 5 illustre des courbes 60A, 60B d'absorption acoustique de plusieurs pièces 50 selon l'invention et la courbe 42 d'absorption acoustique d'une pièce de l'état de la technique.

La courbe 60A correspond à une pièce 50 ayant une première couche 20 et une deuxième couche 22 de masses surfaciques égales à 750 g/m². La courbe 60B correspond à une pièce 50 ayant une deuxième couche 22 de masse surfacique égale à 1100 g/m² et une première couche 20 de masse surfacique égale à 750 g/m².

L'absorption acoustique procurée par la deuxième pièce 50 selon l'invention est donc encore améliorée, et par rapport à l'ensemble de l'état de la technique 42 et est améliorée aussi par rapport à celle de la première pièce 12 selon l'invention.

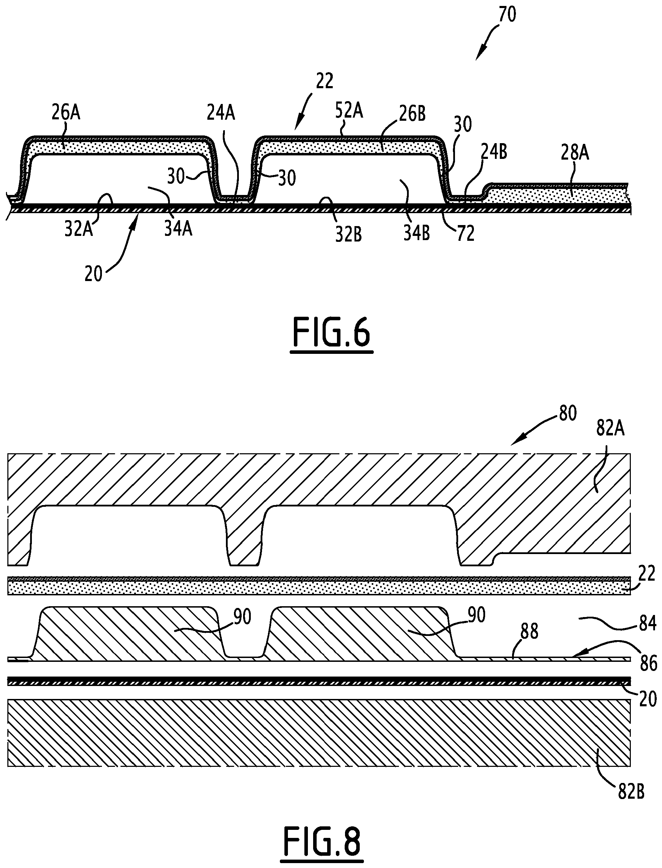

Une troisième pièce 70 selon l'invention est illustrée par la Figure 6. A la différence de la deuxième pièce 50, la troisième pièce 70 comporte une couche résistive 52A appliquée sur la deuxième couche 22, et une couche de protection 72 appliquée sous la première couche 20, à l'opposé de la deuxième couche 22. La couche de protection 72 est par exemple formée par une couche imperméable, notamment une couche de plastique telle que du polypropylène (PP) du polyéthylène (PE) ou du polyamide (PA).

La couche imperméable 72 présente une épaisseur faible notamment inférieure à 0.5mm. La couche 72 est par exemple un film de masse surfacique inférieure à 200 g/m².

En plus de son rôle de protection, la couche imperméable 72 est apte à capturer la masse de la première couche 20 pour garantir une isolation acoustique comme cela est décrit par exemple dans la demande française n°11 57500. Les pièces 12, 50, 70 selon l'invention sont donc particulièrement efficaces en terme de comportement acoustique. Elles contribuent grandement à réduire le bruit engendré dans le véhicule, notamment par l'ensemble moteur.

En outre, les pièces 12, 50, 70 selon l'invention sont de structures légères et robustes. Elles présentent notamment une masse globale inférieure à 2 kg, ce qui contribue à réduire la consommation du véhicule et à diminuer l'émission de gaz à effets de serre.

Un procédé de fabrication d'une pièce 12, 50, 70 selon l'invention va maintenant être décrit, en regard des figures 8 à 10.

Le procédé de fabrication est mis en œuvre dans un moule 80 comportant deux demi-moules 82A, 82B mobiles l'un par rapport à l'autre et délimitant entre eux une cavité de moulage 84. Le moule 80 comporte en outre un noyau mobile 86 destiné à être inséré dans la cavité de moulage 84 pour former l'espace intermédiaire 34A, 34B entre chaque deuxième région 26A, 26B et la première couche 20.

Le demi-moule 82A et le demi-moule 82B délimitent, lorsqu'ils sont fermés, une cavité de moulage 84 de forme sensiblement complémentaire à la pièce 12, 50, 70.

Le noyau 86 comporte une partie plane 88 et des renflements 90 de forme sensiblement complémentaire à la forme de chaque espace intermédiaire 34A, 34B.

Le demi-moule 82A présente des logements de forme analogue à celle de chaque deuxième région 26A, 26B.

Comme illustré par la Figure 8, le procédé comporte tout d'abord l'introduction d'une première couche 20 de matériau composite, puis du noyau 86 et enfin d'une deuxième couche 22 de matériau composite tels qu'elles ont été définies plus haut Ensuite, le moule est chauffé.

Ces couches 20, 22 sont avantageusement formées d'un feutre mélangeant des fibres de polymère thermoplastique et des fibres composites, telles que des fibres de verre.

Le moule 80 est ensuite partiellement fermé en rapprochant les demi-moules 82A, 82B et en insérant la première couche 20 entre le noyau 86 et le demi-moule 82B, et la deuxième couche 22 entre le noyau 86 et le demi-moule 82A.

Ceci provoque une compression de la première couche 20 et une compression sélective de la deuxième couche 22 pour former chaque première région 24A, 24D avec une densité élevée, chaque deuxième région 26A à 26B creuse avec une densité inférieure à celle de la première région 24A à 24D, et chaque troisième région 28A faiblement comprimée ou non comprimée de densité inférieure à la densité de la première région 24A, 24D.

En particulier, les renflements 90 s'introduisent dans les cavités correspondantes ménagées dans le demi-moule 82A et décalent chaque deuxième région 26A, 26B par rapport à la première région 24A à 24D et à la troisième région 28A adjacente.

Le chauffage du moule 80 provoque la fusion des fibres thermoplastiques.

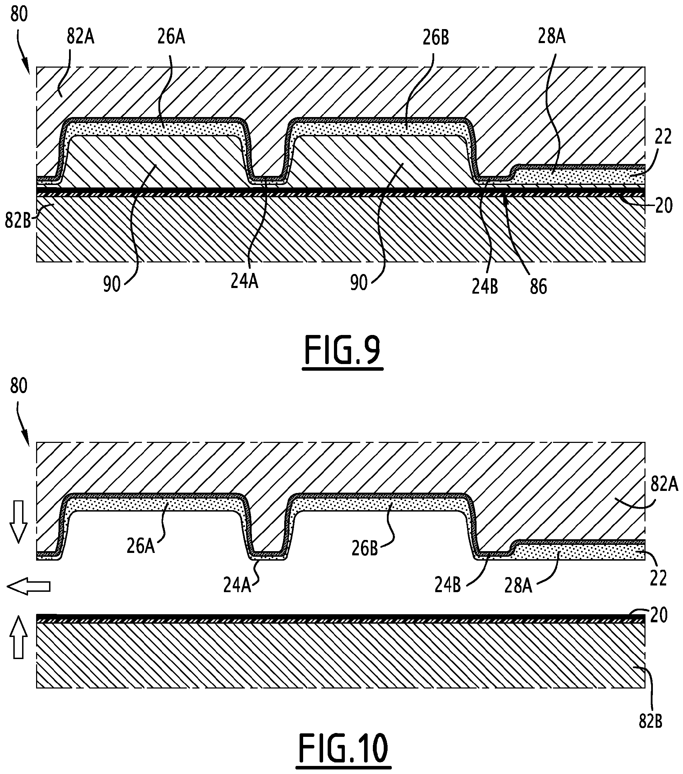

Puis, comme illustré par la Figure 10, le moule 80 est à nouveau ouvert pour extraire le noyau 86 hors de la cavité.

Le moule est ensuite refroidi pour figer les épaisseurs des couches 22, 20.

Une fois le noyau retiré, le moule 80 est à nouveau fermé totalement, pour placer en contact chaque première région 24A, 24B et chaque troisième région 28A de la deuxième couche 22 avec la première couche 20 en appliquant une pression et une température suffisante pour solidariser les deux couches 20, 22.

Après un nouveau temps de refroidissement, la pièce 12, 50, 70 ainsi formée est extraite hors du moule 80 et présente donc un espace intermédiaire 34A, 34B en regard de chaque deuxième région 26A, 26B. La pièce 12, 50, 70 présente également une première région 24A, 24D comprimée, appliquée sur la première couche 20 et au moins une troisième région 28A faiblement comprimée ou non comprimée appliquée sur la première couche 20.

Le procédé de fabrication décrit en regard des Figures 8 à 10 est donc très économique, car il ne nécessite qu'un seul moule 80. Ce procédé procure à ces pièces des caractéristiques structurelles et acoustiques, à travers une méthode de fabrication en une étape extrêmement économique.

Ceci est un avantage par rapport aux procédés connus de l'état de la technique dans lesquels une première pièce est réalisée par injection de plastique, une deuxième pièce est réalisée par moussage et la première pièce et la deuxième pièce sont assemblées l'une sur l'autre.

Dans une autre variante (non représentée), la pièce forme une tablette de véhicule automobile. Cette tablette est notamment une tablette est apte à obturer vers le haut un espace de chargement dans le coffre du véhicule et à porter des objets. La tablette comporte alors, en plus des couches précédemment décrites, une couche de décor (par exemple une moquette textile ou autre). Cette couche de décor peut alors avoir les mêmes caractéristiques de résistance au passage de l'air qu'un non tissé résistif tel que décrit plus haut. Dans ce cas, la première couche 20 est disposée au dessus de la deuxième couche 22.

## Revendications

1. Pièce (12 ; 50 ; 70) d'équipement de véhicule automobile, comprenant :
- une première couche (20) de support réalisée en un matériau composite;
- une deuxième couche (22) réalisée en un matériau poreux ouvert, la deuxième couche (22) étant appliquée partiellement sur la première couche (20), la deuxième couche (22) comportant au moins une première région (24A à 24D) appliquée sur la première couche (20) et au moins une deuxième région (26A, 26B) disposée en regard et à l'écart de la première couche (20), la deuxième région (26A, 26B) délimitant avec la première couche (20) un espace intermédiaire (34A, 34B) au moins partiellement rempli de gaz;
la deuxième région (26A, 26B) présentant une densité inférieure à la densité de la première région (24A à 24D), la deuxième couche (22) comprenant au moins une troisième région (28A) appliquée sur la première couche (20), la troisième région (28A) présentant une densité inférieure à la densité de la première région ;
la pièce étant **caractérisée en ce qu'**elle comporte au moins une couche poreuse résistive (52A, 52B) disposée sur l'une de la première couche (20) et de la deuxième couche (22), la résistance au passage de l'air de la couche poreuse résistive étant comprise entre 200 N.m⁻³.s et 2000 N.m⁻³.s.

2. Pièce (12 ; 50 ; 70) selon la revendication 1, **caractérisée en ce que** la densité de la troisième région (28A) est inférieure à la densité de la deuxième région (26A, 26B).

3. Pièce (12 ; 50 ; 70) selon la revendication 2, **caractérisée en ce que** la densité de la deuxième région (26A, 26B) est comprise entre 250 kg/m³ et 300 kg/m³, la densité de la troisième région (28A) étant comprise entre 200 kg/m³ et 250 kg/m³.

4. Pièce (50 ; 70) selon l'une des revendications précédentes, **caractérisée en ce que** la résistance au passage de l'air de la couche poreuse résistive (52A) en regard de la troisième région (28A) est supérieure à la résistance au passage de l'air de la troisième région (28A).

5. Pièce (50 ; 70) selon la revendication 4, **caractérisée en ce que** la différence entre la résistance au passage de l'air de la couche poreuse résistive (52A, 52B) et la résistance au passage de l'air de la troisième région (28A) est supérieure à 250 N.m⁻³.s.

6. Pièce (12 ; 50 ; 70) selon l'une quelconque des revendications précédentes, **caractérisée en ce que** la deuxième région (26A, 26B) s'étend sensiblement parallèlement à une zone (32A, 32B) de la première couche (20), la deuxième région (26A, 26B) étant raccordée à la première région (24A, 24B) par une région intermédiaire (30) faisant saillie entre la première région (24A, 24B) et la deuxième région (26A, 26B).

7. Pièce (12 ; 50 ; 70) selon l'une quelconque des revendications précédentes, **caractérisée en ce que** la première couche (20) est formée d'un seul tenant à partir d'un matériau composite comportant des fibres de polymère et des fibres céramiques, en particulier des fibres de silice.

8. Pièce (12 ; 50 ; 70) selon l'une quelconque des revendications précédentes, **caractérisée en ce que** la deuxième couche (26A, 26B) est formée d'un seul tenant à partir d'un matériau composite comprimé localement, le matériau composite contenant avantageusement des fibres de polymère et des fibres de céramique, notamment des fibres de silice.

9. Pièce (12 ; 50 ; 70) selon l'une quelconque des revendications précédentes, **caractérisée en ce que** la masse surfacique de la première couche (20) est comprise entre 500 g/m² et 1500 g/m².

10. Pièce (12 ; 50 ; 70) selon l'une quelconque des revendications précédentes, **caractérisée en ce que** la masse surfacique de la deuxième couche (22) est comprise entre 500 g/m² et 1500 g/m².

11. Pièce (12 ; 50 ; 70) selon l'une quelconque des revendications précédentes, **caractérisée en ce que** l'épaisseur maximale de l'espace intermédiaire (34A, 34B), prise entre la deuxième région (26A, 26B) et la première couche (20) est supérieure à l'épaisseur de la troisième région (28A).

12. Pièce (12 ; 50 ; 70) selon l'une quelconque des revendications précédentes, **caractérisée en ce qu'**elle comporte une couche étanche (72) de protection disposée en regard de la première couche (20) à l'opposé de la deuxième couche (22).

13. Véhicule automobile (10), **caractérisé en ce qu'**il comporte une pièce (12 ; 50 ; 70) selon l'une quelconque des revendications précédentes, la pièce (12 ; 50 ; 70) étant avantageusement disposée sous le moteur du véhicule pour former un carénage de protection.

## Patentansprüche

1. Bauteil (12; 50; 70) zum Ausrüsten eines Kraftfahrzeuges, umfassend:
- eine erste Trägerschicht (20), die aus einem Verbundmaterial hergestellt ist;
- eine zweite Schicht (22), die aus einem offenen porösen Material hergestellt ist, wobei die zweite Schicht (22) teilweise auf die erste Schicht (20) aufgebracht ist und die zweite Schicht (22) mindestens einen ersten, auf die erste Schicht (20) aufgebrachten Bereich (24A bis 24D) und mindestens einen zweiten Bereich (26A, 26B), der gegenüber und mit Abstand zur ersten Schicht (20) angeordnet ist, aufweist, wobei der zweite Bereich (26A, 26B) mit der ersten Schicht (20) einen Zwischenraum (34A, 34B) begrenzt, der mindestens teilweise mit Gas gefüllt ist;
wobei der zweite Bereich (26A, 26B) eine Dichte aufweist, die kleiner ist als die Dichte des ersten Bereichs (24A bis 24D) und die zweite Schicht (22) mindestens einen dritten Bereich (28A) umfasst, der auf die erste Schicht (20) aufgebracht ist, wobei der dritte Bereich (28A) eine Dichte kleiner als die Dichte des ersten Bereichs aufweist;
wobei das Bauteil **dadurch gekennzeichnet ist, dass** es mindestens eine poröse Widerstandsschicht (52A, 52B) aufweist, die auf eine der ersten Schicht (20) und der zweiten Schicht (22) angeordnet ist, wobei der Luftdurchgangswiderstand der porösen Widerstandsschicht zwischen 200 Nm⁻³s und 2000 Nm⁻³s beträgt.

2. Bauteil (12; 50; 70) nach Anspruch 1, **dadurch gekennzeichnet, dass** die Dichte des dritten Bereichs (28A) kleiner als die Dichte des zweiten Bereichs (26A, 26B) ist.

3. Bauteil (12; 50; 70) nach Anspruch 2, **dadurch gekennzeichnet, dass** die Dichte des zweiten Bereichs (26A, 26B) zwischen 250 kg/m³ und 300 kg/m³ liegt, wobei die Dichte des dritten Bereichs (28A) zwischen 200 kg/m³ und 250 kg/m³ liegt.

4. Bauteil (50; 70) nach einem der vorhergehenden Ansprüche, **dadurch gekennzeichnet, dass** der Luftdurchgangswiderstand der porösen Widerstandsschicht (52A) gegenüber dem dritten Bereich (28A) größer ist als der Luftdurchgangswiderstand des dritten Bereichs (28A).

5. Bauteil (50; 70) nach Anspruch 4, **dadurch gekennzeichnet, dass** die Differenz zwischen dem Luftdurchgangswiderstand der porösen Widerstandsschicht (52A, 52B) und dem Luftdurchgangswiderstand des dritten Bereichs (28A) größer als 250 Nm⁻³s ist.

6. Bauteil (12; 50; 70;) nach einem beliebigen der vorhergehenden Ansprüche, **dadurch gekennzeichnet, dass** der zweite Bereich (26A, 26B) sich im Wesentlichen parallel zu einer Zone (32A, 32B) der ersten Schicht (20) erstreckt, wobei der zweite Bereich (26A, 26B) an den ersten Bereich (24A, 24B) durch einen Zwischenbereich (30) angeschlossen ist, der zwischen dem ersten Bereich (24A, 24B) und dem zweiten Bereich (26A, 26B) vorspringt.

7. Bauteil (12; 50; 70) nach einem beliebigen der vorhergehenden Ansprüche, **dadurch gekennzeichnet, dass** die erste Schicht (20) in einem Stück aus einem Verbundmaterial gebildet ist, das Polymerfasern und Keramikfasern, insbesondere Siliziumfasern aufweist.

8. Bauteil (12; 50; 70) nach einem beliebigen der vorhergehenden Ansprüche, **dadurch gekennzeichnet, dass** die zweite Schicht (26A, 26B) in einem Stück aus einem lokal komprimierten Verbundmaterial gebildet ist, wobei das Verbundmaterial vorteilhafterweise Polymerfasern und Keramikfasern, insbesondere Siliziumfasern enthält.

9. Bauteil (12; 50; 70) nach einem beliebigen der vorhergehenden Ansprüche, **dadurch gekennzeichnet, dass** das Flächengewicht der ersten Schicht (20) zwischen 500 g/m² und 1500 g/m² beträgt.

10. Bauteil (12; 50; 70) nach einem beliebigen der vorhergehenden Ansprüche, **dadurch gekennzeichnet, dass** das Flächengewicht der zweiten Schicht (22) zwischen 500 g/m² und 1500 g/m² beträgt.

11. Bauteil (12; 50; 70) nach einem beliebigen der vorhergehenden Ansprüche, **dadurch gekennzeichnet, dass** die maximale Dicke des Zwischenraums (34A, 34B), genommen zwischen dem zweiten Bereich (26A, 26B) und der ersten Schicht (20), größer als die Dicke des dritten Bereichs (28A) ist.

12. Bauteil (12; 50; 70) nach einem beliebigen der vorhergehenden Ansprüche, **dadurch gekennzeichnet, dass** es eine dichte Schutzschicht (72) aufweist, die gegenüber der ersten Schicht (20) entgegengesetzt zur zweiten Schicht (22) angeordnet ist.

13. Kraftfahrzeug (10) **dadurch gekennzeichnet, dass** es ein Bauteil (12; 50; 70) nach einem beliebigen der vorhergehenden Ansprüche aufweist, wobei das Bauteil (12; 50; 70) vorteilhafterweise unter dem Motor des Fahrzeugs angeordnet ist, um eine Schutzverkleidung zu bilden.

## Claims

1. A component (12; 50; 70) for a motor vehicle, comprising:
- a first support layer (20) made from a composite material;
- a second layer (22) made from an open porous material, the second layer (22) being partially applied on the first layer (20), the second layer (22) including at least one first region (24A, to 24D) applied on the first layer (20) and at least one second region (26A, 26B) positioned across from and separated from the first layer (20), the second region (26A, 26B) together with the first layer (20) delimiting an intermediate space (34A, 34B) at least partially filled with gas;
the second region (26A, 26B) having a density lower than the density of the first region (24A to 24D), the second layer (22) comprising at least one third region (28A) applied on the first layer (20), the third region (28A) having a density lower than the density of the first region ;
the component being **characterized in that** it includes at least one resistive porous layer (52A, 52B) positioned on one of the first layer (20) and the second layer (22), the air flow resistance from the resistive porous layer being comprised between 200 N.m⁻³.s and 2000 N.m⁻³.s.

2. The component (12; 50; 70) according to claim 1, **characterized in that** the density of the third region (28A) is lower than the density of the second region (26A, 26B).

3. The component (12; 50; 70) according to claim 2, **characterized in that** the density of the second region (26A, 26B) is comprised between 250 kg/m³ and 300 kg/m³, the density of the third region (28A) being comprised between 200 kg/m³ and 250 kg/m³.

4. The component (50; 70) according to any one of the preceding claims, **characterized in that** the air flow resistance of the resistive porous layer (52A) across from the third region (28A) is greater than the air flow resistance of the third region (28A).

5. The component (50; 70) according to claim 4, **characterized in that** the air flow resistance of the resistive porous layer (52A, 52B) and the air flow resistance of the third region (28A) is greater than 250 N.m⁻³.s.

6. The component (12; 50; 70) according to any one of the preceding claims, **characterized in that** the second region (26A, 26B) extends substantially parallel to a zone (32A, 32B) of the first layer (20), the second region (26A, 26B) being connected to the first region (24A, 24B) by an intermediate region (30) protruding between the first region (24A, 24B) and the second region (26A, 26B).

7. The component (12; 50; 70) according to any one of the preceding claims, **characterized in that** the first layer (20) is formed in a single piece from a composite material including polymer fibers and ceramic fibers, in particular silica fibers.

8. The component (12; 50; 70) according to any one of the preceding claims, **characterized in that** the second layer (26A, 26B) is formed in a single piece from a composite material that is locally compressed, the composite material advantageously containing polymer fibers and ceramic fibers, in particular silica fibers.

9. The component (12; 50; 70) according to any one of the preceding claims, **characterized in that** the surface density of the first layer (20) is comprised between 500 g/m² and 1500 g/m².

10. The component (12; 50; 70) according to any one of the preceding claims, **characterized in that** the surface density (22) of the second layer is comprised between 500 g/m² and 1500 g/m².

11. The component (12; 50; 70) according to any one of the preceding claims, **characterized in that** the maximum thickness of the intermediate space (34A, 34B), between the second region (26A, 26B) and the first layer (20), is greater than the thickness of the third region (28A).

12. The component (12; 50; 70) according to any one of the preceding claims, **characterized in that** it includes a protective sealed layer (72) positioned across from the first layer (20) opposite the second layer (22).

13. A motor vehicle (10), **characterized in that** it includes a component (12; 50; 70) according to any one of the preceding claims, the component (12; 50; 70) advantageously being positioned below the engine of the vehicle to form a protective fairing.
